# EUROPEAN PATENT SPECIFICATION

(11) **EP 3 561 303 B1**
(45) Date of publication and mention of the grant of the patent: **30.12.2020**
(21) Application number: 18744177.9
(22) Date of filing: 25.01.2018
(51) Int. Cl.: F04C 18/02, F04C 27/00, F04C 29/00, F16J 15/3204, F04C 29/02, F04C 29/12

(54) **SCROLL COMPRESSOR**
SPIRALVERDICHTER
COMPRESSEUR À SPIRALE

(30) Priority: 27.01.2017 JP 2017013326
(43) Date of publication of application: 30.10.2019
(73) Proprietor: Mitsubishi Heavy Industries, Ltd., Chiyoda-ku, Tokyo 1008332 (JP)
(72) Inventor: HIRATA, Hirofumi, Tokyo 108-8215 (JP); ITO, Takahide, Tokyo 108-8215 (JP); YAMASHITA, Takuma, Tokyo 108-8215 (JP)
(74) Representative: Cabinet Beau de Loménie
(86) International application number: PCT/JP2018/002175
(87) International publication number: WO 2018/139500

(56) References cited:
- JP-A- S62 206 282
- JP-A- 2003 202 018
- JP-A- 2005 147 356
- JP-A- 2007 023 776
- US-A- 4 990 072
- US-A1- 2012 251 301
- US-A1- 2013 315 767

## Description

### [Technical Field]

The present disclosure relates to a scroll compressor suitably used for, for example, a double rotating scroll compressor.

### [Background Art]

A double rotating scroll compressor has been well-known (refer to PTL 1). Such a double rotating scroll compressor includes a seal plate on a front end surface of a discharge cylinder. The seal plate seals high-pressure side occupied by compressed working fluid and low-pressure side that is an internal space of a housing.

### [Citation List]

### [Patent Literature]

[PTL 1] Japanese Unexamined Patent Application, Publication No. 2015-1175
US 4990072 discloses a known example of scroll compressor.
JP 2007023776 discloses another known example of scroll compressor.
US 2012/251301 discloses a known compressor structure.
US 2013/315767 discloses a known example of scroll expander.

### [Summary of Invention]

### [Technical Problem]

In PTL 1, a seal plate 48 sandwiched between a front end surface of a discharge cylinder 46 and a boss portion 50 is compressed in an axis direction to achieve sealing (reference numerals are those described in PTL 1). In a case where force pressing the seal plate in the axis direction is not sufficient, however, sealability may be deteriorated.

In contrast, it is conceivable to have a configuration to seal an outer peripheral surface of the discharge cylinder that is rotated around the axis. When a seal member is disposed on an outer periphery of the discharge cylinder, however, an axial dimension of the discharge cylinder is increased and pressure loss is increased.

Further, in a case of an oilless compressor in which no misty oil is contained in the fluid to be compressed, it is necessary to supply a lubricant to lubricate the sealing member.

The present disclosure is made in consideration of such circumstances, and an object of the present disclosure is to provide a scroll compressor that makes it possible to reduce the axial dimension of the discharge cylinder rotated around the axis while supplying a lubricant when the outer peripheral surface of the discharge cylinder is sealed.

### [Solution to Problem]

To solve the above-described issues, a scroll compressor according to the present invention is defined in claim 1. Further embodiments of the compressor are defined in the dependent claims. Substantially, the compressor includes paired scroll members that include a compression chamber to compress working fluid, a housing that houses the paired scroll members, a discharge cylinder that discharges the compressed working fluid from the compression chamber and is rotated around an axis with respect to the housing, a bearing that rotatably supports the discharge cylinder with respect to the housing, and a seal member that is located between the discharge cylinder and the housing. A lubricant is enclosed in a space formed between the bearing and the seal member.

The space is formed between the seal member and the bearing that rotatably supports the discharge cylinder, and the lubricant is enclosed in the space. This makes it possible to configure the space in which the lubricant is enclosed, without waste. For example, as compared with a configuration in which two seal members are disposed side by side in the axis direction and the lubricant is enclosed in a space between the seal members, it is sufficient to provide one seal member, and it is possible to reduce the number of components and to reduce the axial dimension of the discharge cylinder. Accordingly, the outer peripheral surface of the discharge cylinder can be sealed in compact, and pressure loss of the working fluid can be reduced.

In particular, even in an oilless compressor in which the working fluid contains no lubricant oil, lubrication of the seal member is achieved by the lubricant enclosed between the seal member and the bearing, which allows for reduction of wear.

Even when the oilless compressor is used in a case where clean working fluid containing no oil is desired in a demander of the compressed working fluid, the scroll compressor according to the present disclosure can reduce wear of the seal member.

Further, in the scroll compressor according to the present disclosure, the bearing may be a rolling bearing including seal plates on respective side surfaces, and the seal plates may be fixed to an outer ring of the bearing and may be not in contact with an inner ring of the bearing.

In the case where the rolling bearing including the seal plates on respective end surface sides is used for the bearing, such a non-contact system, in which the seal plates do not come into contact with the inner ring, makes it possible to prevent energy loss due to generation of heat and the like due to the contact, and to prevent deterioration of system efficiency of the scroll compressor.

Further, in the scroll compressor according to the present disclosure, the bearing may be a rolling bearing including a seal plate on a side surface on side opposite to the seal member side, and may not include a seal plate on a side surface on the seal member side.

The side surface of the bearing on the seal member side faces the space in which high-pressure working fluid is sufficiently sealed by the seal member and in which the lubricant is enclosed. This allows for omission of the seal plate on the seal member side. On the other hand, a side surface of the bearing on the side opposite to the seal member faces an inside of the housing. Therefore, the seal plate is disposed to prevent leakage of the lubricant.

Further, in the scroll compressor according to the present disclosure, the seal member may be an oil seal.

The lubricant is provided between the oil seal and the bearing, which makes it possible to reduce wear of the oil seal.

Furthermore, the scroll compressor according to the present disclosure may further include a driving shaft that is rotationally driven by a driving unit, and the scroll compressor may be configured as a double rotating scroll compressor that includes a driving-side scroll member and a driven-side scroll member as the paired scroll members. The driving-side scroll member is coupled to the driving shaft and performs rotational movement, and the driven-side scroll member receives power transmitted from the driving-side scroll member to perform rotational movement.

In the double rotating scroll compressor not including a static scroll member, possibility of wear of the seal member is remarkable. The wear can be reduced by providing the lubricant between the seal member and the bearing.

### [Advantageous Effects of Invention]

It is possible to reduce the axial dimension of the discharge cylinder rotated around the axis while supplying the lubricant when the outer peripheral surface of the discharge cylinder is sealed.

### [Brief Description of Drawings]

[Fig. 1]

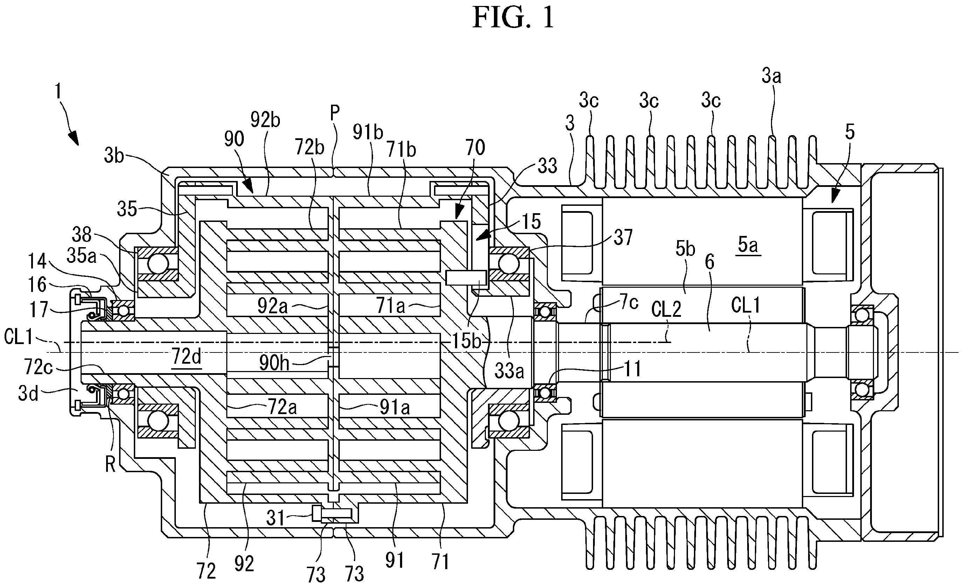

   Fig. 1 is a vertical cross-sectional view illustrating a double rotating scroll compressor according to an embodiment of the present disclosure.
[Fig. 2]

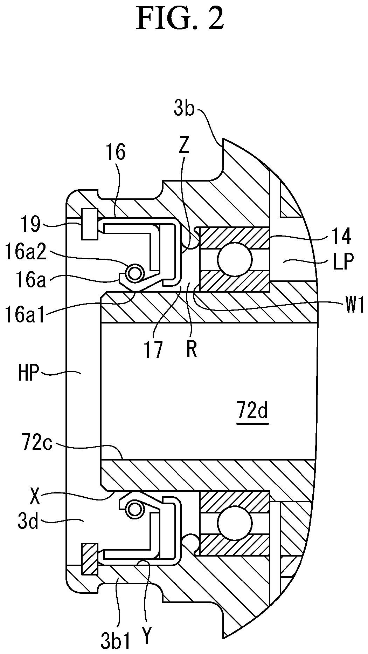

   Fig. 2 is a vertical cross-sectional view illustrating a main part of Fig. 1 in an enlarged manner.
[Fig. 3]

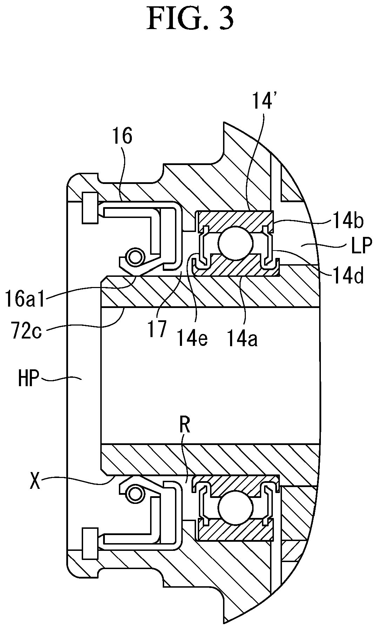

   Fig. 3 is a vertical cross-sectional view illustrating a modification 1.
[Fig. 4]

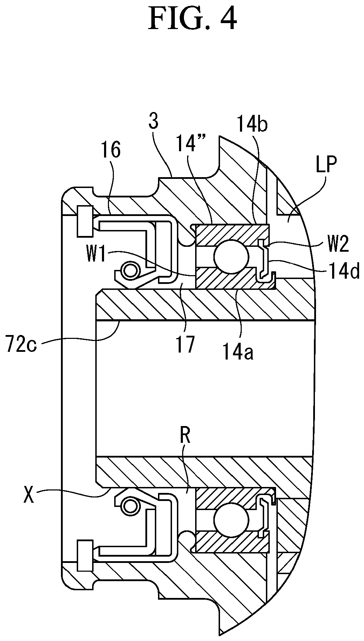

   Fig. 4 is a vertical cross-sectional view illustrating a modification 2.
[Fig. 5]

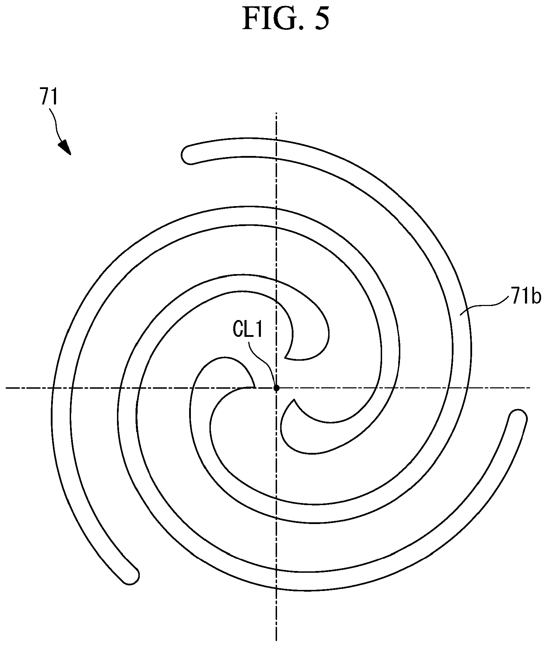

   Fig. 5 is a plan view illustrating a driving-side scroll member.

### [Description of Embodiments]

An embodiment of the present disclosure is described below with reference to Fig. 1 and Fig. 2.

Fig. 1 illustrates a double rotating scroll compressor (scroll compressor) 1. The double rotating scroll compressor 1 can be used as, for example, a supercharger that compresses combustion air (fluid) to be supplied to an internal combustion engine such as a vehicle engine.

The double rotating scroll compressor 1 includes a housing 3, a motor (driving unit) 5 accommodated on one end side in the housing 3, and a driving-side scroll member 70 and a driven-side scroll member 90 that are accommodated on the other end side in the housing 3.

The housing 3 has a substantially cylindrical shape, and includes a motor accommodation portion (first housing) 3a that accommodates the motor 5, and a scroll accommodation portion (second housing) 3b that accommodates the scroll members 70 and 90.

A cooling fin 3c to cool the motor 5 is provided on an outer periphery of the motor accommodation portion 3a. A discharge opening 3d from which compressed air (working fluid) is discharged is provided at an end part of the scroll accommodation portion 3b. Note that, although not illustrated in Fig. 1, the housing 3 includes an air suction opening from which air (working fluid) is sucked in.

The scroll accommodation portion 3b of the housing 3 is divided at a division surface P that is located at a substantially center in an axis direction of the scroll members 70 and 90. The housing 3 includes a flange portion (not illustrated) that protrudes outward at a predetermined position in a circumferential direction. A bolt or the like as a fastening means is inserted into and fixed to the flange portion, which results in fastening at the division surface P.

The motor 5 is driven by being supplied with power from an unillustrated power supply source. Rotation of the motor 5 is controlled by an instruction from an unillustrated control unit. A stator 5a of the motor 5 is fixed to an inner periphery of the housing 3. A rotor 5b of the motor 5 rotates around a driving-side rotation axis CL1. A driving shaft 6 that extends on the driving-side rotation axis CL1 is connected to the rotor 5b. The driving shaft 6 is connected to a first driving-side shaft portion 7c of the driving-side scroll member 70.

The driving-side scroll member 70 includes a first driving-side scroll portion 71 on the motor 5 side, and a second driving-side scroll portion 72 on the discharge opening 3d side.

The first driving-side scroll portion 71 includes a first driving-side end plate 71a and first driving-side walls 71b.

The first driving-side end plate 71a is connected to the first driving-side shaft portion 7c connected to the driving shaft 6, and extends in a direction orthogonal to the driving-side rotation axis CL1. The first driving-side shaft portion 7c is provided so as to be rotatable with respect to the housing 3 through a first driving-side bearing 11 that is a ball bearing.

The first driving-side end plate 71a has a substantially disc shape in a planar view. The first driving-side wall 71b formed in a spiral shape is provided on the first driving-side end plate 71a. The three lines of first driving-side walls 71b are disposed at an equal interval around the driving-side rotation axis CL1 (see Fig. 5).

As illustrated in Fig. 1, the second driving-side scroll portion 72 includes a second driving-side end plate 72a and second driving-side walls 72b. The second driving-side walls 72b are each formed in a spiral shape as with the above-described first driving-side walls 71b.

A second driving-side shaft portion (discharge cylinder) 72c that extends in the driving-side rotation axis CL1 and has a cylindrical shape is connected to the second driving-side end plate 72a. The second driving-side shaft portion 72c is provided so as to be rotatable with respect to the housing 3 through a second driving-side bearing 14 that is a ball bearing. The second driving-side end plate 72a includes a discharge port 72d extending along the driving-side rotation axis CL1.

A seal member 16 is provided on downstream side of the second driving-side bearing 14 in a discharge direction of the compressed air, namely, on front end side that is a free end of the second driving-side shaft portion 72c, between the second driving-side shaft portion 72c and the housing 3. The seal member 16 and the second driving-side bearing 14 are disposed at a predetermined interval in the driving-side rotation axis CL1 direction, and a space R is provided therebetween. A lubricant 17 that is grease as, for example, semi-solid lubricant is enclosed in the space R.

The first driving-side scroll portion 71 and the second driving-side scroll portion 72 are fixed while front ends (free ends) of the walls 71b and 72b corresponding to each other face each other. The first driving-side scroll portion 71 and the second driving-side scroll portion 72 are fixed by bolts (wall fixing parts) 31 that are fastened to respective flange portions 73 provided at a plurality of positions in the circumferential direction. The flange portions 73 are provided so as to protrude outward in a radial direction.

The driven-side scroll member 90 includes a first driven-side scroll portion 91 and a second driven-side scroll portion 92. Driven-side end plates 91a and 92a are located at a substantially center of the driven-side scroll member 90 in the axis direction (horizontal direction in figure). The driven-side end plates 91a and 92a are fixed while rear surfaces (other side surfaces) of the respective driven-side end plates 91a and 92a are superimposed and in contact with each other. Although not illustrated, the fixing is performed by a bolt, a pin, etc. The through hole 90h is provided at a center of each of the driven-side end plates 91a and 92a, and causes the compressed air to flow toward the discharge port 72d. The first driven-side walls 91b are provided on one side surface of the first driven-side end plate 91a, and the second driven-side walls 92b are provided on one side surface of the second driven-side end plate 92a. The first driven-side walls 91b provided on the motor 5 side from the first driven-side end plate 91a engage with the first driving-side walls 71b of the first driving-side scroll portion 71. The second driven-side walls 92b provided on the discharge opening 3d side from the second driven-side end plate 92a engage with the second driving-side walls 72b of the second driving-side scroll portion 72.

The support members 33 and 35 described later are fixed to the outer peripheries of the first driven-side walls 91b. The second driven-side walls 92b also have the similar configuration.

The first support member 33 and the second support member 35 are provided at the respective ends of the driven-side scroll member 90 in the axis direction (horizontal direction in figure). The first support member 33 is disposed on the motor 5 side, and the second support member 35 is disposed on the discharge opening 3d side. The first support member 33 is fixed to the front ends (free ends) of the first driven-side walls 91b, and the second support member 35 is fixed to the front ends (free ends) of the second driven-side walls 92b. The shaft portion 33a is provided on the center axis side of the first support member 33, and the shaft portion 33a is fixed to the housing 3 through the first support member bearing 37. The shaft portion 35a is provided on the center axis side of the second support member 35, and the shaft portion 35a is fixed to the housing 3 through the second support member bearing 38. As a result, the driven-side scroll member 90 rotates around the driven-side rotation axis CL2 through the support members 33 and 35.

The pin-ring mechanism (synchronous driving mechanism) 15 is provided between the first support member 33 and the first driving-side end plate 71a. More specifically, a circular hole is provided in the first driving-side end plate 71a, and the pin member 15b is provided on the first support member 33. The pin-ring mechanism 15 transmits the driving force from the driving-side scroll member 70 to the driven-side scroll member 90, and causes the scroll members 70 and 90 to perform rotational movement in the same direction at the same angular velocity.

As illustrated in Fig. 2, the scroll accommodation portion 3b includes a second driving-side shaft portion accommodation portion 3b1 that accommodates the second driving-side shaft portion 72c, and the second driving-side bearing 14 is provided between an outer peripheral surface X of the second driving-side shaft portion 72c and an inner peripheral surface Y of the second driving-side shaft portion accommodation portion 3b1.

The seal member 16 is an oil seal, and a position of the seal member 16 in the axis direction is regulated by a stopper ring 19 that is fitted in the inner peripheral surface Y of the second driving-side shaft portion accommodation portion 3b1 as illustrated in Fig. 2. The seal member 16 includes a seal lip portion 16a made of a resin. The seal lip portion 16a includes a lip front end part 16a1 that protrudes to the inner peripheral side and comes into contact with the outer peripheral surface X of the second driving-side shaft portion 72c. An annular spring 16a2 is provided on rear-surface side (outer peripheral side) of the seal lip portion 16a. The lip front end part 16a1 is pressed against the entire circumference of the outer peripheral surface X of the second driving-side shaft portion 72c by elastic force of the spring 16a2.

The lubricant 17 is enclosed in the space R surrounded by a surface of the seal member 16 and a surface of the second driving-side bearing 14 facing each other, namely, a side surface Z of the seal member 16 and a surface W1 of the second driving-side bearing 14, the outer peripheral surface X of the second driving-side shaft portion 72c, and the inner peripheral surface Y of the second driving-side shaft portion accommodation portion 3b1.

The double rotating scroll compressor 1 including the above-described configuration operates in the following manner.

When the driving shaft 6 rotates around the driving-side rotation axis CL1 by the motor 5, the first driving-side shaft portion 7c connected to the driving shaft 6 also rotates, and the driving-side scroll member 70 accordingly rotates around the driving-side rotation axis CL1. When the driving-side scroll member 70 rotates, the driving force is transmitted from the support members 33 and 35 to the driven-side scroll member 90 through the pin-ring mechanisms 15, and the driven-side scroll member 90 rotates around the driven-side rotation axis CL2. At this time, when the pin member 15b of the pin-ring mechanism 15 moves while being in contact with the inner peripheral surface of the circular hole, the both scroll members 70 and 90 perform rotational movement in the same direction at the same angular velocity.

When the scroll members 70 and 90 perform rotational movement, the air sucked through the air suction opening of the housing 3 is sucked in from outer peripheral side of each of the scroll members 70 and 90, and is taken into the compression chambers formed by the scroll members 70 and 90. Further, compression is separately performed in the compression chambers formed by the first driving-side walls 71b and the first driven-side walls 91b and in the compression chambers formed by the second driving-side walls 72b and the second driven-side walls 92b. A volume of each of the compression chambers is reduced as each of the compression chambers moves toward the center, which compresses the air. The air compressed by the first driving-side walls 71b and the first driven-side walls 91b passes through the through holes 90h provided in the driven-side end plates 91a and 92a, and is joined with the air compressed by the second driving-side walls 72b and the second driven-side walls 92b. The resultant air passes through the discharge port 72d and is discharged to outside from the discharge opening 3d of the housing 3. The discharged compressed air is guided to an unillustrated internal combustion engine, and is used as combustion air.

A high-pressure space HP occupied by the compressed air that has been discharged from the discharge port 72d but before being discharged to the outside from the discharge opening 3d and a low-pressure space LP occupied by sucked air that is sucked from the suction opening of the housing 3 and is taken in from the outer peripheral side of the both scroll members 70 and 90 are partitioned by the seal member 16, the lubricant 17, and the second driving-side bearing 14.

The lip front end part 16a1 that is a front end of the seal lip portion 16a of the seal member 16 is pressed against the outer peripheral surface X of the second driving-side shaft portion 72c by the spring 16a2 provided on the seal lip portion 16a, and an oil film is formed by the lubricant 17 between the lip front end part 16a1 and the outer peripheral surface X of the second driving-side shaft portion 72c.

The present embodiment achieves the following action effects.

The space R is formed between the seal member 16 and the second driving-side bearing 14 that rotatably supports the second driving-side shaft portion 72c, and the lubricant 17 is enclosed in the space R. Therefore, it is possible to configure the space in which the lubricant 17 is enclosed, without waste. For example, as compared with a configuration in which two seal members are disposed side by side in the axis direction and the lubricant is enclosed in a space between the seal members, it is possible to reduce the number of components and to reduce an axial dimension of the second driving-side shaft portion 72c. Accordingly, the outer peripheral surface X of the second driving-side shaft portion 72c can be sealed in compact, which makes it possible to reduce pressure loss of the compressed air.

In particular, even in an oilless compressor in which the air does not contain the lubricant oil, lubrication of the seal member 16 is achieved by the lubricant 17 enclosed between the seal member 16 and the second driving-side bearing 14, which allows for reduction of wear.

Even when the oilless compressor is used in a case where clean compressed air containing no oil is desired in a demander of the compressed air, the scroll compressor 1 according to the present embodiment can reduce wear of the seal member.

The present embodiment may be modified in the following manner.

### [Modification 1]

As illustrated in Fig. 3, a sealed ball bearing may be used as the second driving-side bearing 14. A second driving-side bearing 14' includes seal plates 14d and 14e on respective side surfaces. The seal plates 14d and 14e prevent leakage of the lubricant oil inside the second driving-side bearing 14'. Each of the seal plates 14d and 14e is formed in an annular plate shape, and a seal plate in which a steel plate is coated with rubber is suitably used for each of the seal plates 14d and 14e. An outer periphery of each of the seal plates 14d and 14e is fixed to an outer ring 14b of the second driving-side bearing 14', and an inner periphery of each of the seal plates 14d and 14e is separated from an inner ring 14a so as not to come into contact with the inner ring 14a.

As described above, a non-contact configuration in which the seal plates 14d and 14e do not come into contact with the inner ring 14a makes it possible to prevent energy loss due to generation of heat and the like due to the contact, thereby preventing deterioration of system efficiency of the scroll compressor 1.

### [Modification 2]

As illustrated in Fig. 4, a second driving-side bearing 14" may include only the seal plate 14d on side W2 opposite to the seal member 16 without the seal plate 14e on the seal member side W1 illustrated in Fig. 3.

A side surface of the bearing 14" on the seal member side W1 faces the space R in which the high-pressure air of the high-pressure space HP is sufficiently sealed by the seal member 16 and in which the lubricant 17 is enclosed. This allows for omission of the seal plate on the seal member side W1. On the other hand, a side surface of the bearing 14" on the side W2 opposite to the seal member 16 faces the inside of the housing 3. Therefore, the seal plate 14d is disposed to prevent leakage of the lubricant.

In the present embodiment, the oil seal is used as the seal member 16; however, the oil seal may be replaced with a self-seal packing such as a gasket, a mechanical seal, a piston ring, and an O-ring. The lubricant 17 can reduce wear at a contact portion between the seal member 16 that is a self-seal packing such as a gasket, a mechanical seal, a piston ring, and an O-ring and the outer peripheral surface X of the second driving-side shaft portion 72c.

Further, grease that is semi-solid lubricant has been used as the lubricant 17. Alternatively, lubricant oil that is fluid lubricant and is represented by mineral oil may be used.

The above-described scroll compressor 1 may be an "oilless" or "oil-free" compressor in which the compressed air that has been compressed in the compression chamber formed by the scroll members 7 and 9 contains no lubricant oil, and the compressed air is discharged to the outside from the discharge opening 3d through the discharge port 72d. In the case of the oilless compressor, the seal member 16 may be worn down because no lubricant oil is contained in the housing 3 including the high-pressure space HP and the low-pressure space LP; however, providing the lubricant 17 to the space between the seal member 16 and the second driving-side bearing 14 makes it possible to achieve lubrication of the seal member 16 and to reduce wear of the seal member 16.

Note that, in the above-described embodiments and modifications, the double rotating scroll compressor is used as the supercharger; however, the present disclosure is not limited thereto. The double rotating scroll compressor is widely used to compress fluid, and for example, can be used as a refrigerant compressor used in air conditioner. In addition, the scroll compressor 1 according to the present disclosure is applicable to an air brake device using air force, as a brake system for a railway vehicle.

### [Reference Signs List]

1 Double rotating scroll compressor (scroll compressor)
3 Housing
3a Motor accommodation portion
3b Scroll accommodation portion
3b1 Second driving-side shaft portion accommodation portion.
3c Cooling fin
3d Discharge opening
5 Motor (driving unit)
5a Stator
5b Rotor
6 Driving shaft
7c First driving-side shaft portion
11 First driving-side bearing
14, 14', 14" Second driving-side bearing
14a Inner ring
14b Outer ring
14d Seal plate
14e Seal plate
15 Pin-ring mechanism (synchronous driving mechanism)
15b Pin member
16 Seal member (oil seal)
16a Seal lip portion
16a1 Lip front end part
16a2 Spring
17 Lubricant (grease)
31 Bolt (wall fixing part)
33 First support member
33a Shaft portion
35 Second support member
35a Shaft portion
37 First support member bearing
38 Second support member bearing
70 Driving-side scroll member
71 First driving-side scroll portion
71a First driving-side end plate
71b First driving-side wall
72 Second driving-side scroll portion
72a Second driving-side end plate
72b Second driving-side wall
72c Second driving-side shaft portion
72d Discharge port
73 Flange portion
90 Driven-side scroll member
90h Through hole
91 First driven-side scroll portion
91a First driven-side end plate
91b First driven-side wall
92 Second driven-side scroll portion
92a Second driven-side end plate
92b Second driven-side wall
CL1 Driving-side rotation axis
CL2 Driven-side rotation axis
P Division surface
X Outer peripheral surface of second driving-side shaft portion
Y Inner peripheral surface of second driving-side shaft portion accommodation portion
Z Side surface of seal member
W1 Seal member side of second driving-side bearing
W2 Side of second driving-side bearing opposite to seal member
HP High-pressure space
LP Low-pressure space
R Space

## Claims

1. A scroll compressor (1), comprising:
paired scroll members that include a compression chamber to compress working fluid;
a housing (3) that houses the paired scroll members;
a discharge cylinder (72c) that discharges the compressed working fluid from the compression chamber and is rotated around an axis with respect to the housing (3);
a bearing (14) that rotatably supports the discharge cylinder (72c) with respect to the housing (3); and
a seal member (16) that is located between the discharge cylinder (72c) and the housing (3), wherein
a lubricant that lubricates the seal member is enclosed in a space formed between the bearing (14) and the seal member (16), **characterised in that** the seal member (16) includes a seal lip portion (16a), the seal lip portion (16a) includes a lip front end part (16a1) that comes into contact with an outer peripheral surface (X) of the discharge cylinder (72c), an annular spring (16a2) is provided on outer peripheral side of the seal lip portion (16a), and the lip front end part (16a1) is pressed against an entire circumference of the outer peripheral surface of the discharge cylinder (72c).

2. The scroll compressor (1) according to claim 1, wherein
the bearing (14) is a rolling bearing including seal plates on respective side surfaces, and
the seal plates are fixed to an outer ring of the bearing (14) and are not in contact with an inner ring of the bearing (14) .

3. The scroll compressor (1) according to claim 1, wherein the bearing (14) is a rolling bearing including a seal plate on a side surface on side opposite to the seal member (16) side, and does not include a seal plate on a side surface on the seal member (16) side.

4. The scroll compressor (1) according to any one of claims 1 to 3, wherein the seal member (16) is an oil seal.

5. The scroll compressor (1) according to any one of claims 1 to 4, further comprising a driving shaft (6) that is rotationally driven by a driving unit, wherein
the scroll compressor (1) is configured as a double rotating scroll compressor that includes a driving-side scroll member (70) and a driven-side scroll member (90) as the paired scroll members, the driving-side scroll member (70) being coupled to the driving shaft (6) and performing rotational movement, and the driven-side scroll member (90) receiving power transmitted from the driving-side scroll member (70) to perform rotational movement.

## Patentansprüche

1. Scrollverdichter (1), der Folgendes umfasst:
gepaarte Scrollelemente, die eine Verdichtungskammer zum Verdichten eines Arbeitsfluids beinhalten;
ein Gehäuse (3), in dem die gepaarten Scrollelemente untergebracht sind;
einen Ausgabezylinder (72c), der das verdichtete Arbeitsfluid aus der Verdichtungskammer ausgibt und mit Bezug auf das Gehäuse (3) um eine Achse gedreht wird;
ein Lager (14), das den Ausgabezylinder (72c) mit Bezug auf das Gehäuse (3) drehbar stützt; und
ein Dichtungselement (16), das sich zwischen dem Ausgabezylinder (72c) und dem Gehäuse (3) befindet, wobei
ein Schmiermittel, das das Dichtungselement schmiert, in einem Raum umschlossen ist, der zwischen dem Lager (14) und dem Dichtungselement (16) gebildet ist,
**dadurch gekennzeichnet, dass**
das Dichtungselement (16) einen Dichtungslippenabschnitt (16a) beinhaltet, wobei der Dichtungslippenabschnitt (16a) einen Lippenvorderendteil (16a1) beinhaltet, der mit einer Außenperipheriefläche (X) des Ausgabezylinders (72c) in Kontakt kommt, eine ringförmige Feder (16a2) auf einer Außenperipherieseite des Dichtungslippenabschnitts (16a) bereitgestellt ist und der Lippenvorderendteil (16a1) gegen einen gesamten Umfang der Außenperipheriefläche des Ausgabezylinders (72c) gedrückt wird.

2. Scrollverdichter (1) nach Anspruch 1, wobei
das Lager (14) ein Wälzlager ist, das auf jeweiligen Seitenflächen Dichtplatten beinhaltet, und
die Dichtplatten an einem Außenring des Lagers (14) befestigt sind und mit einem Innenring des Lagers (14) nicht den Kontakt sind.

3. Scrollverdichter (1) nach Anspruch 1, wobei das Lager (14) ein Wälzlager ist, das auf einer Seitenfläche auf einer Seite gegenüber dem Dichtungselement (16) eine Dichtplatte beinhaltet und auf einer Seitenfläche auf der Seite des Dichtungselements (16) keine Dichtplatte beinhaltet.

4. Scrollverdichter (1) nach einem der Ansprüche 1 bis 3, wobei das Dichtungselement (16) eine Öldichtung ist.

5. Scrollverdichter (1) nach einem der Ansprüche 1 bis 4, der ferner eine Antriebswelle (6) umfasst, die von einer Antriebseinheit drehend angetrieben wird, wobei
der Scrollverdichter (1) als ein zweifach drehender Scrollverdichter ausgelegt ist, der ein antriebsseitiges Scrollelement (70) und ein abtriebsseitiges Scrollelement (90) als die gepaarten Scrollelemente beinhaltet, wobei das antriebsseitige Scrollelement (70) an die Antriebswelle (6) gekoppelt ist und eine Drehbewegung durchführt und das abtriebsseitige Scrollelement (90) eine Leistung empfängt, die vom antriebsseitigen Scrollelement (70) übertragen wird, um eine Drehbewegung durchzuführen.

## Revendications

1. Compresseur à spirales (1) comprenant :
des éléments de spirale en paire qui comprennent une chambre de compression pour comprimer le fluide de travail ;
un boîtier (3) qui loge les éléments de spirale en paire ;
un cylindre de décharge (72c) qui décharge le fluide de travail comprimé de la chambre de compression et est entraîné en rotation autour d'un axe par rapport au boîtier (3) ;
un palier (14) qui supporte, en rotation, le cylindre de décharge (72c) par rapport au boîtier (3) ; et
un élément d'étanchéité (16) qui est positionné entre le cylindre de décharge (72c) et le boîtier (3), dans lequel :
un lubrifiant qui lubrifie l'élément de joint d'étanchéité est enfermé dans un espace formé entre le palier (14) et l'élément de joint d'étanchéité (16),
**caractérisé en ce que** :
l'élément de joint d'étanchéité (16) comprend une partie de lèvre de joint d'étanchéité (16a), la partie de lèvre de joint d'étanchéité (16a) comprend une partie d'extrémité avant de lèvre (16a1) qui vient en contact avec une surface périphérique externe (X) du cylindre de décharge (72c), un ressort annulaire (16a2) est prévu sur un côté périphérique externe de la partie de lèvre de joint d'étanchéité (16a), et la partie d'extrémité avant de lèvre (16a1) est comprimée contre toute la circonférence de la surface périphérique externe du cylindre de décharge (72c).

2. Compresseur à spirales (1) selon la revendication 1, dans lequel :
le palier (14) est un palier à rouleaux comprenant des plaques de joint d'étanchéité sur les surfaces latérales respectives, et
les plaques de joint d'étanchéité sont fixées sur une bague externe du palier (14) et ne sont pas en contact avec une bague interne du palier (14).

3. Compresseur à spirales (1) selon la revendication 1, dans lequel le palier (14) est un palier à rouleaux comprenant une plaque de joint d'étanchéité sur une surface latérale d'un côté opposé au côté de l'élément de joint d'étanchéité (16), et ne comprend de plaque de joint d'étanchéité sur une surface latérale du côté de l'élément de joint d'étanchéité (16).

4. Compresseur à spirales (1) selon l'une quelconque des revendications 1 à 3, dans lequel l'élément de joint d'étanchéité (16) est un joint d'étanchéité à huile.

5. Compresseur à spirales (1) selon l'une quelconque des revendications 1 à 4, comprenant en outre un arbre d'entraînement (6) qui est entraîné, en rotation, par une unité d'entraînement, dans lequel :
le compresseur à spirales (1) est configuré comme un compresseur à spirales co-rotatives qui comprend un élément de spirale du côté de l'entraînement (70) et un élément de spirale du côté entraîné (90) en tant qu'éléments de spirale en paire, l'élément de spirale du côté de l'entraînement (70) étant couplé à l'arbre d'entraînement (6) et réalisant le mouvement de rotation, et l'élément de spirale du côté entraîné (90) recevant l'énergie transmise de l'élément de spirale du côté de l'entraînement (70) pour réaliser le mouvement de rotation.
